# EUROPEAN PATENT APPLICATION

(11) **EP 1 065 899 A1**
(43) Date of publication of application: **03.01.2001**
(21) Application number: 99202125.3
(22) Date of filing: 30.06.1999
(51) Int. Cl.: H04Q 7/22

(54) **Method and apparatus for exchanging messages in a two-way communication system**

(71) Applicant: Telefonaktiebolaget L M Ericsson (Publ), 126 25 Stockholm (SE)
(72) Inventor: de Vries, Martin Jacobus, 7609 TA Almelo (NL)
(74) Representative: Dohmen, Johannes Maria Gerardus

(57) **Abstract**

A method of and a two-way radio communication system (13) for exchanging text messages between a radio access unit (17) and a radio communication unit (15) such as a radio telephone handset arranged for voice and text data communication. A message content identifier is associated with a text message to be transmitted from a radio access unit (17) to a radio communication unit (15). In response to the receipt of the message content identifier, the radio communication unit (15) provides for a user select return message requiring one or a limited number of key strokes on a key pad of the radio communication unit (15). For example a simple "YES" or "NO" key stroke. The message content identifier may take the form of a query identifier or priority identifier. The system (13) may operate in accordance with the GSM or DECT radio communication standard, wherein the means for exchanging text messages operate following the SMS protocol.

## Description

### Field of the Invention

The present invention relates to telecommunication systems and, more specifically, to a method of and equipment for exchanging text messages in a two-way or duplex radio communication system between a radio access unit and a mobile or portable radio communication unit.

### Background of the Invention

Wireless telecommunication systems, such as the well-known cellular telephone and data communication systems, like the pan-European Global System for Mobile communications (GSM), and cordless telephone and data communication systems, such as designated DECT (Digital Enhanced Cordless Telecommunications), typically comprise a plurality of mobile or portable radio communication units and a plurality of fixed radio access units or radio base stations.

Besides telephone services, present cellular and cordless radio communication systems also provide data and message services, such as designated SMS (Short Message Service). SMS enables transfer of text messages between a radio access unit and a cellular and/or cordless radio communication unit.

Transfer of text messages from a typical mobile or cordless radio communication unit arranged for telephone communication is, however, in practice very cumbersome. This, because of the limited number of keys available on a typical telephone key pad, which implies that several characters have to be assigned to a single key. In order to distinguish between the individual characters of a key several methods are known based on, among others, the duration of a key stroke, the number of key strokes, provision of a mode key, etc. Despite these methods, keying in a message of several words is already very time consuming. Therefore, at present, text message services such as SMS are more or less operated as a one-way service from the radio access unit to the radio communication unit.

Text messages for transmission from a radio access unit to a radio telecommunication unit are usually provided from personal computers or the like, via the fixed or wired telephone and data network, such as the Public Switched Telephone Network (PSTN), the Integrated Services Digital Network (ISDN), the Internet, and Local Area Networks (LANs).

### Summary of the Invention

It is an object of the present invention to improve and enhance the use of a text message service, like SMS, from a telecommunication unit, such as a typical mobile or portable telephone.

To this end, according to the present invention, there is provided a method of exchanging text messages in a two-way radio communication system between a radio access unit and a radio communication unit arranged for voice and text data communication, wherein a message content identifier is associated with a text message to be transmitted from said radio access unit to said radio communication unit, and wherein said radio communication unit in response to receipt of said message content identifier provides for a user select return message requiring one or a limited number of key strokes on a key pad of said radio communication unit.

The invention is based on the insight that the majority of text messages exchanged with a radio communication unit requires a simple return message, such as an acknowledge message or a confirmation message like "YES" or "NO", or "USER-DEFINED-BUSY' and other simple and very short return messages. By associating with a text message a so-called "message content identifier" in accordance with the present invention, the radio communication unit will be informed about the content of a received text message and, accordingly, can provide for a return message to be selected by a user by simply striking one or a limited number of keys of the keypad of the radio communication unit.

In a preferred embodiment of the invention, the message content identifier comprises a query identifier, in return to the receipt of which a user may reply by a single key stroke, preferably a 'YES" or "NO" key stroke.

Next to, or instead of, a query identifier, the invention provides also for a priority identifier to be associated with a text message, such that the message transmitted to a radio communication unit receives a prioritised treatment/processing. Several priority levels can be envisaged, such as a so-called "break-through" and "interrupt priority identifier, by which a message can break through or interrupt a busy or otherwise occupied radio communication unit, or a radio communication unit in a stand-by mode or in a user defined non-disturbing mode, etc. If required, break-through or interruption can be accompanied by a suitable audible and/or tactile alerting signal, for example.

The invention is excellently suitable for transmitting alarm messages and the like in a factory, hospital, security service or otherwise.

In a yet further embodiment of the invention, messages to be transmitted from a radio access unit to a radio communication unit can be automatically selected from pre-stored messages or the like, while the return messages can be automatically processed. In an emergency case, for example, selected emergency messages can be exchanged with pre-selected radio communication units dependent on a particular event and the type of acknowledgement or confirmation return message received. In a hospital environment, for example, in case of an emergency, as a first attempt a first doctor or nurse can be called using a text message according to the present invention and, if a negative or no return message at all is received, a second, third, or even further call can be placed with a second, a third or further doctor or nurse. This, completely automatically triggered by a particular event.

With the present invention, text messages may be transferred to the radio telecommunication system via the Internet, by e-mail or by the so-called WAP (Wireless Application Protocol) push services, for example. The message content identifier may be associated, for example added, to a message by the originator of the message, a network operator, from a system resource such as a system database, etc.

The invention relates further to a two-way radio communication system, comprising means for exchanging text messages between a radio access unit and a radio communication unit, arranged for voice and text data communication, further comprising means for associating a message content identifier with a text message to be transmitted from said radio access unit to said radio communication unit, wherein said radio communication unit comprises means for providing a user select return message requiring one or a limited number of key strokes on a key pad of said radio communication unit in response to receipt of said message content identifier.

In a preferred embodiment, the radio communication system is arranged to operate in accordance with the GSM or DECT standard, wherein the means for exchanging text messages operate following a standardised SMS service.

The invention relates also to a radio communication unit, such as a mobile or portable radio telephone handset, comprising keypad means and arranged for exchanging text messages with a radio access unit of a two-way radio communication system, comprising means for processing a message content identifier associated with a text message received, and means for providing a user select return message requiring one or a limited number of key strokes on said key pad of said radio communication unit.

The above-mentioned and other features and advantages of the invention are illustrated in the following description with reference to the enclosed drawings.

### Brief Description of the Drawings

Fig. 1 shows, in a schematic and illustrative manner, a cordless and/or cellular radio telecommunication system operating in accordance with the present invention.

Fig. 2 shows, in a schematic and illustrative manner, a cellular GSM radio telecommunication system, arranged for operating in accordance with the present invention.

Fig. 3 shows a simplified block diagram of a radio communication unit taking the form of a radio telephone set operating in accordance with the present invention.

### Detailed Description of the Embodiments

Without the intention of limitation, the invention will now be explained by its application in a cordless and cellular digital radio telephone system, such as operating in accordance with the Digital Enhanced Cordless Telecommunications (DECT) standard and/or the Global System for Mobile communication (GSM) standard.

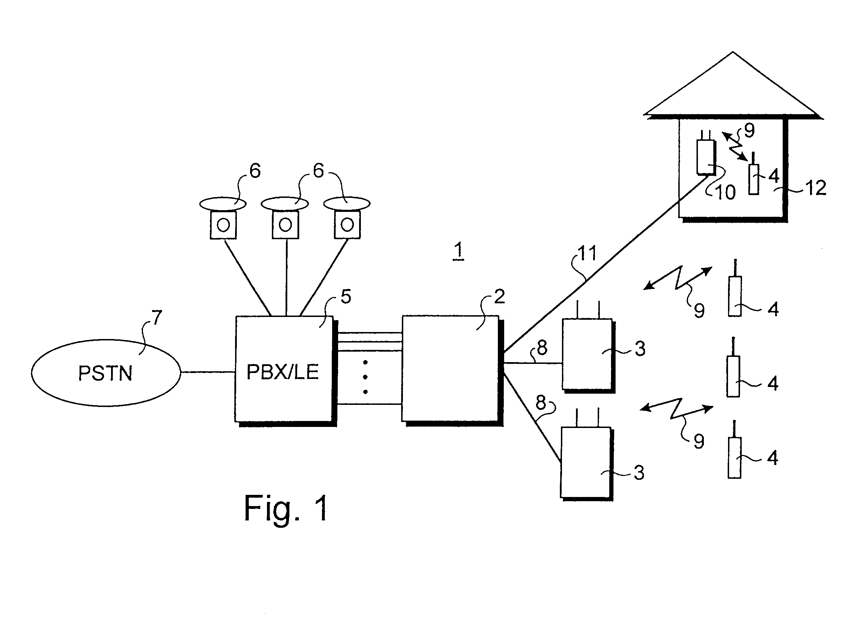

Fig. 1 illustrates a typical cordless radio communication system, generally designated with reference numeral 1. The system comprises three essential elements: a central interface unit 2, called Radio Exchange (RE), a plurality of compact radio access units or radio base stations 3, which are installed throughout the area to be covered and connect directly to the central interface unit 2, and remote cordless radio communication units or terminals in the form of portable telephones or handsets 4, which connect over a radio link 9 to the radio base stations 3.

Each radio base station 3 provides service to a given area, called a cell, which is surrounded and/or overlapped by other cells of other radio base stations 3, i.e. a so-called multi-cell approach. The radius of indoor cells typically amounts from 100 m-2000 m.

The central interface unit 2 is connected to a wired exchange 5, to which a plurality of wired telephones 6 can be connected. In business environments, such as Business Cordless Telecommunication (BCT) applications, this exchange 5 is generally a Private Branch eXchange (PBX) whereas in outdoor applications, such as Cordless Terminal Mobility (CTM) the exchange 5 is generally a Local Exchange (LE) which, like the PBX, is connected to a Public Switched Telephone Network (PSTN) 7, i.e. the ordinary wired public telephone network. The central interface unit 2 may connect directly to the wired network 7, which may also be an Integrated Service Digital Network (ISDN).

The radio base stations 3 connect via wires 8 to the central interface unit 2. Although wires 8 are shown in fig. 1, this connection can also be provided by a directional radio link, optical fiber and the like.

In a normal operation mode, the radio communication terminals 4 may place and receive calls within the service area of the radio base stations 3, in accordance with the access rights acquired from an operator of the radio communication system 1. The radio communication terminals 4 may move from one radio base station 3 to another without interruption of a call in progress.

Within the building or house 12 a so-called home-cordless radio base station 10 is provided, having a very limited range of, for example, 10-200m. Although shown connected 11 to the central interface unit 2, the radio base station 10 may also connect directly to the PSTN 7 or ISDN.

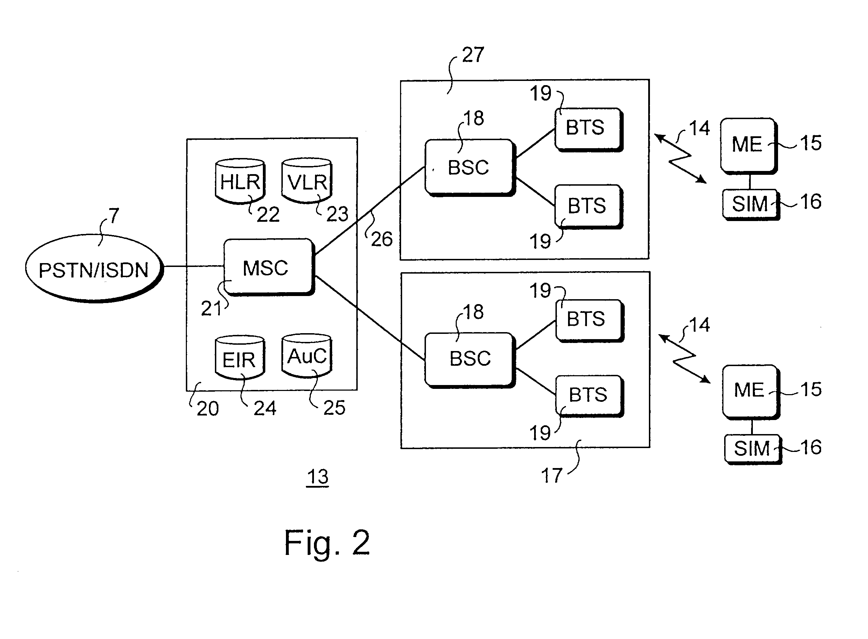

Fig. 2 shows the architecture of a typical GSM network 13, composed of several functional entities, whose functions and interfaces are specified. The GSM network can be divided into three general parts. The radio communication terminal or Mobile Equipment (ME) 15 with its Subscriber Identity Module (SIM) card 16, which are carried by a subscriber. The radio base station subsystem 17, controls the radio link 14 or Um interface with the mobile equipment 15. The main part of the radio base station subsystem 17 is formed by a Base Station Controller (BSC) 18 and Base Transceiver Stations (BTSs) 19 which connect to the BSC 18.

A further major part of the GSM network 13 is the network subsystem 20, comprising the Mobile services Switching Center (MSC) 21, which performs the switching of calls between the radio base stations subsystem 17 and the PSTN/ISDN 7.

The network subsystem 20 further comprises a Home Location Register (HLR) 22 and a Visitor Location Register (VLR) 23 which, together with the MSC 21, provide the call-routing and roaming capabilities of the GSM network 13. The HLR 22 contains all the administrative information of each subscriber registered in the corresponding GSM network, along with the current location of the mobile equipment 15.

The VLR 23 contains selected administrative information from the HLR 22, necessary for call control and provision of the subscriber services for each mobile currently located in the geographically area controlled by the VLR 23.

For authentication and security purposes, an Equipment Identity Register (EIR) 24 and an Authentication Center (AuC) 25 are provided in the network subsystem 20. The EIR 24 is a database that contains a list of valid mobile equipment on the network and the AuC 25 is a protected base that stores a copy of the secret key stored in each subscriber's SIM card 16. The MSC 21 connects to the BSC 18 via a so-called A-interface 26.

Micro-cell cellular radio communication systems operate with a cell radius of 10m-200m, whereas the radius of outdoor cells typically ranges from 200 m up to 5000 m, and even 35 km for macro-cell cellular networks.

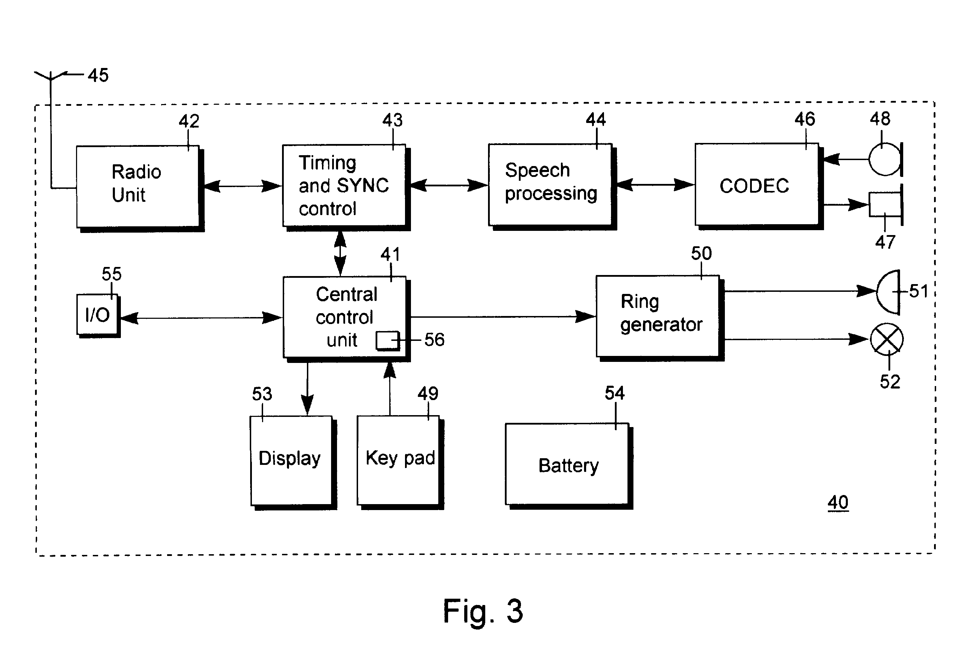

Figure 3 shows a simplified block diagram of a radio telephone set 40, arranged for receiving and processing text messages in accordance with the present invention.

The radio telephone set 40 comprises four essential building blocks, i.e. a central control and application unit 41, a radio unit 42, a timing and synchronisation (SYNC) control unit 43 and a speech processing unit 44.

The radio unit 42 comprises an air interface 45 having an antenna system coupled to a transceiver unit comprising a transmitter/modulator and a receiver/demodulator (not shown).

The timing and synchronisation control unit 43 receives data over the air interface 45 and the radio unit 42. Signalling and synchronisation information are removed from the received data by the unit 43 and the received speech data are fed to the speech processing unit 44. The speech processing unit 44, among others, takes care of the encryption of received data. A codec 46 decodes the received digital speech data into analog form for making it audible to a user of the handset by a loudspeaker 47 connected to the codec 46.

Speech produced by the user is received by a microphone 48 and encoded into a suitable digital format by the codec 46. This encoded speech data is fed to the speech processing unit 44. The timing and synchronisation control unit 43 adds suitable synchronisation and signalling information to the encrypted speech data. The radio unit 42 transmits this signalling and speech data at the air interface 45 for reception by a radio access unit 3; 17 to which the telephone set 40 operatively connects. (See figs. 1 and 2).

The central control and application unit 41 comprises a microprocessor or microcontroller and memory means, and connects to the timing and synchronisation control unit 43. The central control unit 41 essentially controls the system data and the connection with the user of the radio telephone set 40 by a keypad means 49, display means 53 and ring generator means 50, all connected to the central control unit 41. Further, an external interface 55 is provided which connects to the central control unit 41 for external control and data processing purposes.

The ring generator means 50 connects to a buzzer 51 or vibrator (not shown) for producing an audible or tactile alerting signal at the arrival of a call or text message, for example. Optionally, a visual alerting signal may be emitted by a lamp or Light Emitting Diode (LED) 52, connected as shown. The display means 53, such as an LCD device, are operatively connected to the central control unit 41 for displaying call information and other user and system data, such as the "Out of Range"-message and text messages.

For the overall powering of the telephone set 40 a battery and powering unit 54 is included.

In accordance with the present invention, the cordless radio systems 1 and 13 are arranged for exchanging text messages, for example following the known Short Message Service (SMS) protocol. This text message protocol may be implemented with the central interface unit 2, the radio access units or base stations 3, 10, the radio base subsystems 17 and the network subsystem 20, respectively. As will be appreciated by those skilled in the art, implementation of a text message service like SMS is generally known and, accordingly, will not be further elucidated.

With the invention, the text message service is enhanced by a so-called message content identifier, i.e. a short string of information taking a few bits and associated with, for example added, to a text message. The message content identifier identifies the content of a text message to be received by a radio communication unit 4; 15; 40. The message content identifier may be added to a text message from the radio communication system 1; 13, through an operator or by the originator of the message. Messages can be originated from users connected to the PSTN, ISDN or a Local Area Network (LAN), the Internet, by e-mail etc. via the central interface unit and the MSC 21, for example.

Upon receipt of a text message by a radio communication unit 40, the message is interrogated for a message content identifier by interrogation means 56 arranged with the central control unit 41. Upon receipt of a message content identifier, the interrogation means 56 will interpret the identifier for establishing its nature, i.e. a query identifier, priority identifier, etc.

In the case of a query identifier, the interrogation means 56 will set the radio communication unit in a mode for reply via the keypad means 49. Dependent on the content of the message, as established from the message content identifier, the reply may comprise hitting a "YES" or "NO" key, for example, or any other return message as required, which may be defined by the system and/or the user of a radio communication unit 40. In case of a priority identifier, the means 56 may provoke call interruption, wake-up of a radio communication unit, etc. accompanied by a suitable alert via the ring generator means 50 and/or the speech processing means 44.

Text communication in accordance with the present invention may involve the selection of pre-stored messages, transmission to predetermined radio communication units, etc. Information thereof may be stored in a system database with the central interface unit 2 or the MSC 21, for example. Suitable automatic equipment can be operatively connected with the radio communication systems 1; 13 (not shown).

It will be appreciated by those skilled in the art that the present invention can be modified and enhanced, however without deviation from the novel and inventive features of the present invention as defined in the appended claims.

## Claims

1. A method of exchanging text messages in a two-way radio communication system between a radio access unit and a radio communication unit arranged for voice and text data communication, characterised in that a message content identifier is associated with a text message to be transmitted from said radio access unit to said radio communication unit, and in that said radio communication unit in response to receipt of said message content identifier provides for a user select return message requiring one or a limited number of key strokes on a key pad of said radio communication unit.

2. A method according to claim 1, wherein said message content identifier comprises a query identifier, and wherein said return message comprises an acknowledgement message by a single key stroke.

3. A method according to claim 2, wherein said key stroke comprises a "YES" or "NO" key stroke.

4. A method according to any of the previous claims, wherein said message content identifier comprises a priority identifier, and wherein said radio communication unit processes said text messages in response to said priority identifier.

5. A method according to claim 4, wherein said priority identifier comprises several priority levels, among which associated with break-through messages and interrupt messages.

6. A method according to any of the previous claims, wherein said text messages comprising said message content identifier take the form of SMS messages in a GSM or DECT radio communication system.

7. A method according to any of the previous claims, wherein said text messages comprising said message content identifier are selected from a plurality of pre-stored text messages.

8. A method according to any of the previous claims, wherein said text messages comprising said message content identifier and said return messages are automatically processed by message exchange means operatively connected to said radio access unit, and operative in response to an event.

9. A method according to any of the previous claims, wherein said text messages comprising said message content identifier originate from the Internet, by e-mail or WAP (Wireless Application Protocol) push services.

10. A two-way radio communication system comprising means for exchanging text messages between a radio access unit and a radio communication unit, arranged for voice and text data communication, characterised by means for associating a message content identifier with a text message to be transmitted from said radio access unit to said radio communication unit, wherein said radio communication unit comprises means for providing a user select return message requiring one or a limited number of key strokes on a key pad of said radio communication unit in response to receipt of said message content identifier.

11. A radio communication system according to claim 10, wherein said means for associating a message content identifier are arranged for associating a query identifier, and/or a priority identifier.

12. A radio communication system according to claim 10 or 11, operating in accordance with a GSM or DECT radio communication standard, wherein said means for exchanging text messages are arranged for exchanging SMS messages.

13. A radio communication system according to claim 10, 11 or 12, comprising means for automatically processing text messages comprising said message content identifier.

14. A radio communication system according to claim 10, 11, 12 or 13, comprising means for automatically processing return messages.

15. A radio communication unit, such as a mobile or portable radio telephone handset, comprising keypad means and arranged for exchanging text messages with a radio access unit of a two-way radio communication system, characterised by means for processing a message content identifier associated with a text message and means for providing a user select return message requiring one or a limited number of key strokes on said key pad of said radio communication unit.
